# DEMANDE DE BREVET EUROPEEN

(11) **EP 3 226 388 A2**
(43) Date de publication de la demande: **04.10.2017**
(21) Numéro de dépôt: 17157645.7
(22) Date de dépôt: 23.02.2017
(51) Int. Cl.: H02K 5/15

(54) **FLASQUE AVANT PERFECTIONNÉ DE MACHINE ÉLECTRIQUE TOURNANTE ET MACHINE ÉLECTRIQUE TOURNANTE COMPORTANT UN TEL FLASQUE**

(30) Priorité: 30.03.2016 FR 1652723
(71) Demandeur: VALEO EQUIPEMENTS ELECTRIQUES MOTEUR, 94046 Créteil Cedex (FR)
(72) Inventeur: PACCOU, Gordaine, 62120 CAMPAGNE LES WARDRECQUES (FR)

(57) **Abrégé**

Le flasque avant en matière moulable de machine électrique tournante à poulie (1) de réception d'une courroie comporte au moins deux entretoises (70) saillantes d'orientation axiale issues par moulage de sa périphérie externe et destinées à la fixation d'un support d'au moins un organe, tel qu'un galet tendeur de courroie, lesdites entretoises (70) comportant chacune latéralement au moins une creusure (71).

## Description

### Domaine de l'invention

La présente invention concerne un flasque avant en matière moulable de machine électrique tournante à poulie de réception d'une courroie.

La présente invention concerne également une machine électrique tournante à poulie de réception d'une courroie comportant un tel flasque.

### Etat de la technique

A la figure 1, qui est une vue en coupe axiale identique à la figure 1 du document WO 2007/031679, on a représenté de manière schématique une machine électrique tournante conventionnelle sous la forme d'un alternateur réversible appelé alterno-démarreur décrit par exemple dans les documents WO 01/69762 ou FR A 2 745 444.
Cette machine comporte un carter 6, 8 en matière moulable, tel qu'un carter en aluminium ou en matière plastique, un stator externe 5 doté d'un corps 50, classiquement un corps en forme de paquet de tôle, portant un bobinage de stator, un rotor interne 4 solidaire d'un arbre de rotor 2 monté à rotation dans le carter de forme creuse.
Le carter 6, 8 comporte au moins deux parties à savoir un flasque avant 8 (du côté de la poulie d'entraînement 1) et un flasque arrière 6 appelés également respectivement palier avant et palier arrière. Ce carter sert de logement au rotor interne 4, tel qu'un rotor à aimants permanents, à griffes ou à pôles saillants. Le carter porte à sa périphérie externe le corps 50 du stator externe 5 monté notamment par frettage dans le carter. Ce carter comporte des moyens, tels que des pattes, des oreilles ou une platine à trous, pour la fixation de la machine électrique à une partie fixe.
Chaque flasque 6, 8 comporte centralement un logement pour porter un roulement à billes (schématisé par un rectangle avec des croix) de montage à rotation de l'arbre 2.
Un entrefer existe entre la périphérie interne du corps 50 du stator 5 et la périphérie externe du rotor interne 4.
Le bobinage du stator pourra être du type multiphasé, notamment au moins du type triphasé, traversant axialement le corps 50 du stator et s'étendant en saillie axiale de part et d'autre du corps 50 pour former des chignons respectivement avant 51 et arrière 52.
Ce bobinage comporte au moins un enroulement par phase. Les extrémités des enroulements pourront être reliées en étoile, comme visible par exemple à la figure 1 du document EP 0831 580, ou en triangle. Ces extrémités pourront être reliées à un pont redresseur de courant alternatif en courant continu, comme décrit par exemple dans le document WO 02/093717, ou à un onduleur comme décrit par exemple dans les documents EP 0831 580 et FR 2 745 444. Chaque enroulement pourra comporter plusieurs bobines concentriques reliées entre elles comme décrit par exemple dans le document WO 2007/031679. En variante, comme décrit par exemple dans le document EP 0 881 742, les enroulements sont constitués par des fils continus ou des segments conducteurs reliés entre eux par soudage.

Le corps 50 comporte une bande de matière appelée culasse et une pluralité d'encoches alignées, telles que des encoches du type ouvert ou semi- fermé, alignées pour former une pluralité de rainures axiales pour le montage des enroulements du bobinage du stator.

L'arbre de rotor 2 pourra être solidaire à l'avant d'une poulie 1 appartenant à une transmission de mouvement comportant au moins une courroie (non représentée) intervenant entre la machine électrique tournante et par exemple un moteur thermique, tel que le moteur thermique d'un véhicule automobile.

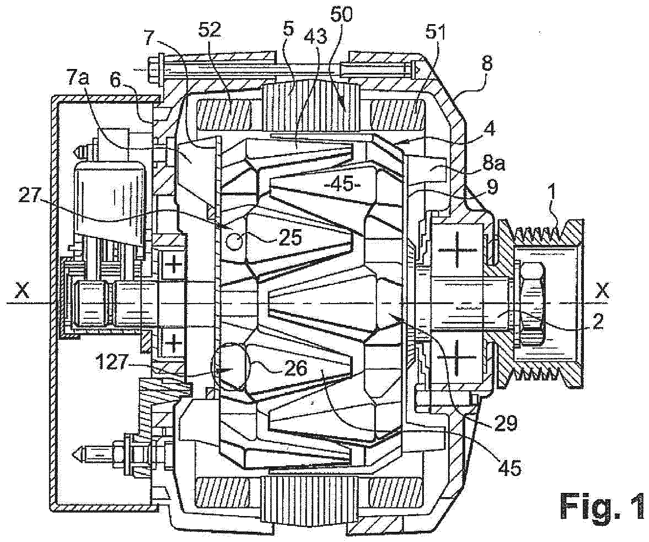

Dans cette figure 1, la poulie 1 et la courroie sont du type Poly-V (marque déposée). Cette poulie 1 de forme creuse comporte un fond traversé par l'arbre de rotation 2, dont elle est solidaire en rotation par exemple par vissage et/ou soudage. L'axe de symétrie axiale XX de l'arbre 2 constitue l'axe de rotation de la machine, l'axe du rotor 4 et du stator 5. Cet arbre 2 porte à solidarisation, par exemple par emmanchement à force, le rotor 4 ici à griffes, pourvu d'un bobinage d'excitation implanté entre deux roues polaires deux roues polaires 27,29 dotées chacune de dents 45 d'orientation axiale imbriquées comme décrit et visible dans le document WO 02/093717.

Les flasques 6, 8 sont de forme creuse et reliés entre eux par des tirants (non référencés) pour formation d'un carter portant intérieurement le stator 5. Le flasque arrière 6 porte un porte-balais (non référencé) dont les balais sont adaptés à frotter sur des bagues collectrices (non référencées) reliées par des liaisons filaires au bobinage inducteur ou bobinage d'excitation (non visible) que comporte le rotor 4 à griffes. Des pôles magnétiques sont formés, à raison de un part dent 45 de roue polaire 27, 29, lorsque le bobinage du rotor est alimenté électriquement. Un capot de protection (non référencé) entoure le porte- balais ainsi que le porte capteur (non référencé). Ce capot est solidaire du flasque arrière 6.

Il importe de refroidir la machine électrique, notamment le bobinage d'excitation du rotor et le bobinage du stator de celle-ci. Pour ce faire on pourra refroidir celle-ci à l'aide d'une ventilation interne, le carter de celle-ci comportant des ouvertures d'entrée et de sortie d'air et au moins un ventilateur pour circulation de l'air entre les entrées et les sorties d'air.

Dans la figure 1 l'alternateur comporte deux ventilateurs, un ventilateur 9 à l'avant du rotor et un ventilateur 7 arrière, tous deux solidaires du rotor par exemple par soudage. En variante l'alternateur pourrait comporter un seul ventilateur, généralement le ventilateur arrière 7 plus puissant que le ventilateur avant 9 implanté du côté de la poulie d'entraînement 1. Un tel ventilateur comporte un flasque d'où part au moins une série de pales saillantes 8a, 7a. L'équilibrage du ventilateur 7, 9 est réalisé généralement en retirant de la matière dans le rotor au moyen de canons de perçages qui font des trous 25 dans une zone de perçage 26 prévue dans la base 127 d'au moins une griffe 45 du rotor 4.

On peut songer à équiper une telle machine électrique tournante d'un dispositif de réglage de la tension de la courroie pour éviter un patinage de celle-ci et optimiser la transmission de mouvement. Un tel dispositif faisant appel à un galet tendeur est décrit par exemple dans les brevets AT 130902 et EP 0 459 894 auxquels on se reportera pour plus de précisions.

Dans le brevet EP 0 459 894 le dispositif de réglage de la tension de la courroie comporte un galet tendeur, un bras de réglage mobile en rotation par rapport au flasque avant du carter de l'alternateur et des moyens de maintien et/ou de réglage de la tension de la courroie, tels qu'un ressort spiral ou un dispositif à pignon et crémaillère. Le galet tendeur est monté rotatif sur le bras avantageusement à la faveur d'un roulement à billes intercalé radialement entre la périphérie interne du galet et un pivot, tel qu'un un boulon, solidaire du flasque avant comme décrit et visible par exemple dans la figure 2 de ce brevet EP 0 459 894.

Dans le brevet EP 0 459 894 le carter à une forme compliquée compte tenu notamment du montage (non visible) de la poulie à effectuer. En outre il est configuré pour constituer le flasque de support du dispositif de réglage de la tension de la courroie, le dit flasque servant également à la fixation de l'alternateur à une partie fixe du véhicule automobile.

On peut songer, sans changer la taille du rotor et du stator, à rendre le support du dispositif de réglage de la tension de la courroie distinct du flaque avant et à fixer ce support sur le carter de la machine électrique par exemple à l'aide d'au moins deux entretoises issues de moulage de la périphérie externe du flasque avant.
Ces entretoises sont soumises à des efforts important du fait de la présence du galet tendeur et risquent de casser du fait de la présence de porosités lors de leur fabrication par moulage.

### Objet de l'invention

La présente invention a pour objet de rendre plus robuste les entretoises.

Suivant l'invention un flasque avant en matière moulable de machine électrique tournante à poulie de réception d'une courroie est caractérisé en ce qu'il comporte au moins deux entretoises d'orientation axiale issues par moulage de sa périphérie externe et destinées à la fixation d'un support d'au moins un organe, tel qu'un galet tendeur de courroie, lesdites entretoises comportant chacune latéralement au moins une creusure, notamment ménagée sur la paroi latérale externe de l'entretoise (70).

Grâce à l'invention les entretoises sont moins poreuses et plus robustes. On n'augmente pas outre mesure l'encombrement et l'implantation des entretoises à la périphérie externe du flasque avant libère de la place pour la poulie. Le support pourra avoir une forme d'arc de cercle permettant le passage de la poulie et une bonne circulation de l'air à l'intérieur de la machine.
En outre on ne change pas les moyens de fixation de la machine électrique tournante à une partie fixe ; les entretoises étant distinctes de ses moyens.
De plus on n'augmente pas la consommation de matière. Plus précisément on aurait pu songer à relier les deux entretoises par un pont de matière pour rendre plus robuste les entretoises, mais dans ce cas on augmente la consommation de matière et le poids de la machine.

Le nombre d'entretoises dépend des applications et des efforts transmis par le support.

Suivant d'autres caractéristiques prises isolément ou en combinaison :
- la creusure s'étend dans la direction dans laquelle s'étend l'entretoise ;
- la creusure est ménagée sur la paroi latérale externe de l'entretoise ;
- la creusure forme, dans un plan orthogonal à l'axe dans lequel s'étend l'entretoise, un segment circulaire ;
- les creusures sont en forme de cavité de faible profondeur ;
- les creusures sont en forme de cavité s'étendant sur au moins 80% de la hauteur de l'entretoise, par exemple s'étendant sur toute la hauteur de l'entretoise;
- les creusures sont de grande longueur par rapport à leur profondeur ;
- les creusures présentent un fond arrondi, notamment pour permettre l'écoulement de matière lors du moulage du flasque ;
- les creusures présentent un fond en forme d'arc de cercle ;
- les creusures comportent un angle de dépouille ;
- les entretoises sont en forme de cheminée;
- une extrémité libre d'au moins une entretoise comporte un trou, notamment taraudé, pour vissage du support;
- une extrémité libre de chaque entretoise comporte un trou, notamment taraudé, pour vissage du support;
- la creusure est distincte du trou de l'extrémité libre de l'entretoise ;
- le trou de l'extrémité libre de chaque entretoise a un diamètre du type M6 ou M8 ;
- dans un plan perpendiculaire à l'axe selon lequel s'étend l'entretoise, chaque creusure forme un segment circulaire dont la hauteur est au moins égal à la moitié du rayon du trou de l'extrémité libre de l'entretoise, par exemple au moins égal au 2/3 du rayon du trou, notamment au moins égal au rayon du trou ;
- une extrémité libre de chaque entretoise est en forme de rivet pour fixation par rivetage du support du dit au moins organe ;
- l'une au moins des entretoises comporte deux creusures ;
- le flasque avant comporte au moins deux entretoises comportant chacune au moins deux creusures.
- le flasque avant comporte entre trois et quatre entretoises équipées chacune d'au moins deux creusures ;
- les entretoises sont réparties circonférentiellement deux à deux selon un angle compris entre 30° et 100°, par exemple entre 45° et 90°,
- l'une au moins des entretoises comporte à sa périphérie externe une ouverture, notamment pour permettre l'évacuation de matière lors du taraudage;
- la dite ouverture est implantée au voisinage de la zone d'enracinement de l'entretoise au corps du flasque avant;
- le flasque comporte un fond prolongé à sa périphérie externe par un rebord, lesdites creusures s'étendant axialement de l'extrémité libre des entretoises à une zone d'enracinement au fond du flasque ;
- les creusures s'étendent axialement de l'extrémité libre des entretoises à une zone d'enracinement au rebord périphérique externe que comporte le flasque ;
- les entretoises s'étendent sur au moins 25% de la longueur de la poulie ;
- le carter est en aluminium ;
- le carter est en matière plastique avantageusement renforcée par des fibres, telles que des fibres de verre.

L'invention a encore pour objet une machine électrique tournante, notamment pour véhicule automobile, comportant une poulie de réception d'une courroie caractérisée en ce qu'elle comporte un flasque avant tel que décrit précédemment.
Selon une réalisation, la machine comporte un rotor comportant un axe de rotation et la creusure s'étend selon un axe parallèle à l'axe de rotation du rotor.
Selon une réalisation, le flasque avant est disposé du côté axial de la machine qui comporte la poulie.
Selon une réalisation, la machine comporte un galet tendeur fixé sur le flasque avant, par l'intermédiaire des entretoises.
Selon une réalisation, la machine comporte des vis de fixation pour la fixation du galet tendeur sur les entretoises du flasque avant.
Selon une réalisation, la machine est un alterno-démarreur de véhicule automobile.

D'autres avantages apparaîtront à la lecture de la description qui va suivre de manière non limitative et ce en regard des dessins annexés

### Brève description des dessins

- la figure 1 est une schématique en coupe axiale d'une machine électrique tournante de l'art antérieur;
- la figure 2 est une de côté d'une machine électrique tournante équipée d'un flasque avant selon l'invention;
- la figure 3 est une vue partielle en perspective de la poulie et du flasque avant de la figure 2;
- la figure 4 est une vue analogue à la figure 3 sans la poulie ;
- la figure 5 est une vue partielle de face du flasque avant des figures 2 à 4.

### Descriptions d'exemples de réalisation de l'invention

### Premier mode de réalisation

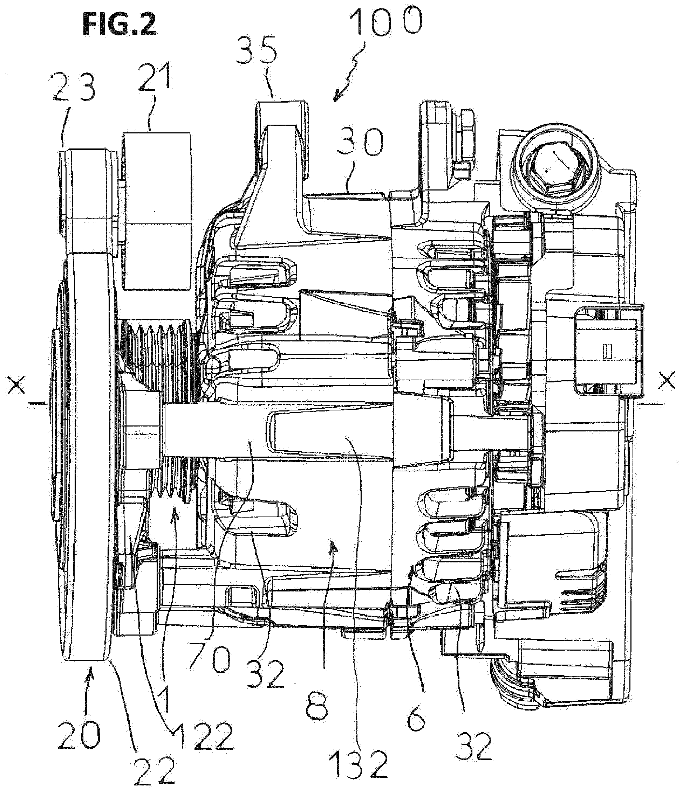

Dans les figures les éléments identiques ou similaires à ceux de la figure 1 seront affectés des mêmes signes de référence et par simplicité on a représenté dans les figures 2 à 5 que les éléments nécessaires à la compréhension de l'invention.
Pour les autres éléments internes de la machine- arbre de rotor, roulement à billes, stator, rotor, ventilateurs, porte-balais , porte capteur, onduleur, pont redresseur selon les cas- on se reportera à l'état de la technique et à la figure 1 sachant que le rotor de la machine pourra être un rotor à griffes, un rotor à pôles saillants ou un rotor à aimants permanents et que le bobinage du stator pourra être à bobines concentriques comme par exemple dans le document WO 2007/031679 ou à bobinage ondulé comme par exemple dans le document EP 0 881 742 . Dans les figures 2 à 5 la machine électrique tournante 100 est un alterno-démarreur à ventilation interne du type de la figure 1 et de celui décrit par exemple dans le document WO 01/69762 ou dans le document FR A 2 745 444 à boîtier électronique déporté. Cet alterno-démarreur comporte donc une poulie 1 solidaire de l'arbre de rotor d'axe X-X. Les orientations axiale, radiale, circonférentielle et transversale seront faites par la suite en référence à l'axe X-X constituant l'axe de rotation de la machine 100, du rotor et du stator.

Le carter 6, 8 de la machine 100 comporte au moins deux parties 6, 8 à savoir un flasque avant 6 et un flasque arrière 6 reliés par des tirants. Ces flasques 6,8 sont de forme creuse et comportent centralement un logement de montage d'un roulement à billes de rotation de l'arbre de rotor (voir figure 1). Bien entendu, de manière connue, le carter de la machine pourra comporter une partie intermédiaire entre les flasques 6, 8 portant le corps du stator. Dans la figure 2 une orientation d'avant à l'arrière correspond à une orientation de gauche à droite et on voit que la machine comporte à l'arrière comme à la figure 1 un capot de protection non référencé solidaire du flasque 6.
Les flasques 6, 8, décrits également dans le document WO 02/09371, sont en matière moulable, en Aluminium dans cet exemple, en variante en matière plastique de préférence renforcée, telle que des fibres de verre.

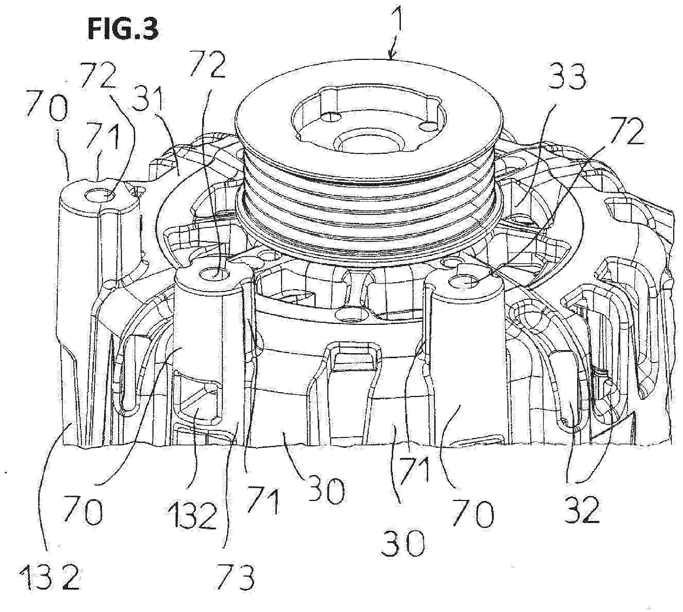

Ces flasques 6,8 ajourés comportent des ouvertures de sortie d'air 32 et d'entrée d'air pour circulation interne de l'air à l'aide de ou des ventilateurs solidaires du rotor.
Les ouvertures de sortie d'air 32 sont formées en majeure partie à la périphérie externe du flasque 6, 8, plus précisément dans un rebord périphérique externe, globalement de forme cylindrique et d'orientation axiale des flasques 6, 8. Les ouvertures d'entrée d'air sont formées dans un fond, ici globalement d'orientation transversale, que présentent les flasques 6,8. Les fonds se raccordent extérieurement aux rebords périphériques externes. Ainsi en ce qui concerne la flasque avant 8 adjacent à la poulie 1, dans les figures 3 à 5 on voit en 31 le fond, en 33 les ouvertures d'entrée d'air, en 32 les ouvertures de sortie d'air et en 30 le rebord. Les ouvertures de sortie 32 sont obtenues par démoulage et affectent de ce fait en partie le fond 31. Dans la figure 2 on voit un moyen de fixation sous la forme d'une patte de fixation 35, que comporte en saillie radiale le rebord 30 du flasque avant 8. On voit également dans cette figure 2 une patte de fixation non référencée du flasque 6. En variante les moyens de fixation sont en forme d'oreille ou sont formés à la faveur d'une platine.
Dans cet exemple le flasque 8 comporte également une oreille de fixation non visible.

Cette machine électrique 100 à poulie 1 de réception d'une courroie est équipée à l'avant d'un support 122 d'un dispositif de réglage 20 de la tension de la courroie. Comme à la figure 1 la poulie 1 et la courroie sont du type Poly-V (marque déposée), la poulie 1 comportant des rainures pour recevoir de manière complémentaire la courroie.
En variante la courroie 1 est de forme trapézoïdale et la poulie 1 comporte une gorge trapézoïdale de réception de la courroie.

Le dispositif 20 comporte au moins un organe sous la forme d'un galet tendeur de la courroie porté par le support 122. L'organe peut être sous la forme d'un galet tendeur dynamique.

Suivant une caractéristique le flasque avant 8 en matière moulable comporte au moins deux entretoises 70 saillantes d'orientation axiale issues par moulage de sa périphérie externe et destinées à la fixation d'un support 122 d'au moins un organe, tel qu'un galet tendeur de courroie, le dites entretoises comportant chacune latéralement au moins une creusure 71.

Avantageusement l'une au moins des entretoises 70 comporte deux creusures 71. Les entretoises 70 sont issues en partie de la périphérie externe du fond 31 et en partie de la périphérie externe du rebord 30 de manière décrite ci -après. Les entretoises 70 s'étendent axialement en saillie en direction opposée au fond 31 constituant la face avant du flasque 8 adjacente à la poulie 1.

Il en résulte que le support 122 est distinct des moyens de fixation 35 du carter 6, 8 à une partie fixe et que la porosité des entretoises 70 est minimisée ce qui rend celles-ci plus robustes. En outre l'encombrement au niveau de la face avant du flasque avant est réduit du fait que le support est distinct des moyens de fixation 35.

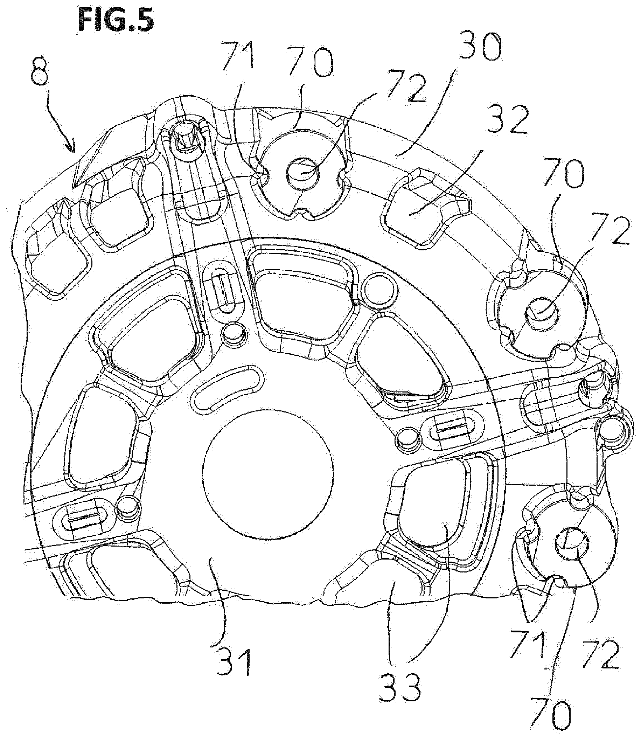

Le nombre des entretoises 70 dépend des applications et des efforts à encaisser.
Dans ce mode de réalisation il est prévu trois entretoises 70 pour porter à fixation le support 122 sollicité par le dispositif 20. Comme visible à la figure 5 deux entretoises 70 sont implantées circonférentiellement entre deux passages (non référencés) des tirants d'assemblage des flasques 6, 8. Dans cet exemple il est prévu trois creusures 71 par entretoises 70 d'orientation axiale. Le nombre de creusures 71 peut varier de 2 à 4 suivant la taille de l'entretoise 70.
Comme visible dans les figures 3 à 5 les creusures 71 sont en forme de cavité de faible profondeur. Ces creusures 71 sont de grande longueur par rapport à leur profondeur.
Les creusures 71 présentent un fond arrondi de rayon différent du rayon des flancs de la creusure 71 raccordant le fond de la creusure à la périphérie externe de l'entretoise 70
Les entretoises 70 sont globalement de forme tronconique pour des raisons de démoulage axial, l'angle du cône étant faible. Ainsi les entretoises ont une forme de cheminée.

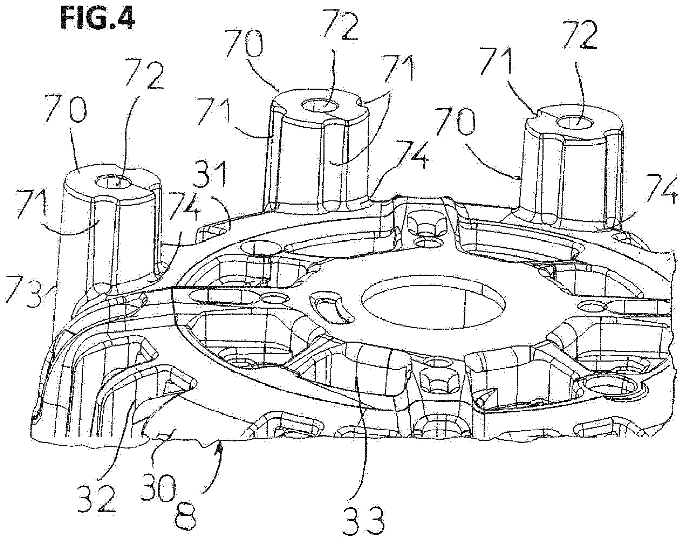

Les creusures 71 s'étendent axialement de l'extrémité libre 72 des entretoises 70 au fond 31 du flasque 8. A la figure 4 on voit en 74 la zone d'enracinement d'une entretoise à la périphérie externe du fond 31. Cette zone 74 est affectée par les creusures 71. La référence 73 désigne la zone d'enracinement d'une entretoise au rebord 30 périphérique externe du flasque 8. L'une au mois des entretoises 70 comporte à sa périphérie externe une ouverture d'évacuation d'air 132. Cette ouverture 132 est implantée au voisinage de la zone d'enracinement 73 de l'entretoise 70 au corps du flasque 8. Dans cet exemple cette ouverture 132 est implantée au voisinage du rebord 30.
Avantageusement chaque entretoise 70 présente une ouverture 132. La ou les ouvertures 132 sont implantées au niveau des sorties d'air 32 et permettent ainsi une bonne évacuation de l'air.
Les trois entretoises 70 sont réparties circonférentiellement selon un angle supérieur à 90° et inférieur à 180°. Ainsi le support 122 pourra avoir une forme en arc de cercle s'étendant radialement à l'extérieur de la poulie 1. Ce support 122 permet le passage de l'air à travers les ouvertures d'entrée d'air 33. On appréciera que les entretoises sont réparties à la périphérie externe de la face avant du flasque avant 8 adjacente à la poulie 1 ce qui permet de libérer un bon passage entre le support 122 et la poulie 1 sans interférence.
Les entretoises 70 s'étendent en saillie sur au moins 25% de la longueur de la poulie 1.

L'extrémité libre 72 de l'entretoise en forme de cheminée est trouée et taraudée pour vissage du support 122 d'au moins un galet tendeur. Dans cet exemple le support 122 est le support du dispositif 20 de réglage de tension de la courroie comportant deux galets tendeurs.

Le dispositif de réglage 20 comporte au moins un galet tendeur 21 de réglage de la tension de la courroie implanté ici globalement radialement au-dessus de poulie 1. Ce dispositif 20 est adjacent à la poulie 1 et s'étend en saillie axiale par rapport à l'extrémité avant du flasque avant 8. Ainsi qu'on le sait cas, grâce au dispositif de réglage de la tension de la courroie on obtient une tension optimale de la courroie, on évite un glissement de la courroie et on filtre les vibrations qui peuvent nuire au bon fonctionnement de la machine électrique tournante, sachant que ces vibrations peuvent casser les moyens de fixation, telles que des oreilles ou des pattes ou des platines, que présente le carter à flasque avant pour sa fixation sur une partie fixe, telle que le bloc moteur d'un véhicule automobile. Le dispositif 20 comporte dans cet exemple un autre galet tendeur porté par le support 122. Les galets sont reliés élastiquement par un ressort 22 à action circonférentielle en étant disposés latéralement de part et d'autre de la poulie 1. L'un des galets pourra être fixe en étant solidaire du support fixe 122, tandis que l'autre galet 21 peut se déplacer circonférentiellement sous l'action du ressort 22 en étant porté par le support 122. Chaque galet est monté à rotation à la faveur d'un pivot porté par une oreille 23 avec de préférence intervention d'un roulement à billes entre la périphérie interne du galet et la périphérie externe du pivot. Le ressort 22 a globalement une forme en oméga dont les extrémités sont attelées aux oreilles des galets. Les pivots, les oreilles et les galets appartiennent chacun à une partie coaxiale, dont l'une est constituée par le support 122. La partie portant le galet 21 est calée en translation par le support 122 et est mobile circonférentiellement à l'encontre du ressort 22. Ces parties sont donc portées par le support 122 et peuvent se déplacer circonférentiellement à l'encontre de la force circonférentielle exercée par le ressort 22. Le support 122 comporte pour ce faire à l'avant un moyeu saillant axialement pour le montage à rotation de la partie coaxiale comportant le pivot, l'oreille et le galet 21 appartenant à la partie mobile en rotation par rapport au support 122.
En variante les deux ensembles, comportant chacun un galet monté à rotation sur un pivot porté par une oreille, appartiennent chacun à une partie coaxiale montée à rotation sur le moyeu du support 122 et calée en translation par le dit support 122. Ces parties peuvent se déplacer chacune circonférentiellement par rapport au support 122 à l'encontre de la force circonférentielle exercée par le ressort 22.
La présence de deux galets se justifie par le fait que l'arbre de rotor est mené lorsque l'alterno-démarreur fonctionne en mode alternateur pour notamment charger la batterie du véhicule et alimenter électriquement les consommateurs de celui-ci, tandis qu'il est menant lorsqu'il fonctionne en mode moteur électrique pour notamment démarrer le moteur du véhicule.

Dans une forme de réalisation l'extrémité libre 72 des entretoises 70 pourra avoir un diamètre externe globalement de 20 mm, tandis que les fonds des creusures 72 pourront être implantés sur un diamètre globalement de 16 mm permettant un bon appui du support 122. Bien entendu ses dimensions dépendent des applications et sont données à titre indicatif.

Ce support 122 pourra comporter des oreilles trouées en vis-à-vis des extrémités libres 72 des entretoises 70 pour passage de vis de fixation vissées dans les trous taraudés des extrémités libres 72. Les oreilles pourront être creuses et coiffer les extrémités libres 72. Un bon appui du support 122 est ainsi réalisé.

La courroie de transmission de mouvement pourra entraîner uniquement la machine électrique tournante via la poulie de celle-ci.
En variante la courroie de transmission de mouvement pourra entraîner également un autre accessoire tel que le compresseur d'une installation de climatisation. Dans ce cas le moteur thermique du véhicule automobile et l'accessoire présentent chacun une poulie pour le passage de la courroie Pour plus de précisions sur le chemin de la courroie de transmission de mouvement on se reportera à la figure 1 du document DE 102011082764 (EP 2 627 929 B), les deux galets étant disposés latéralement de part et d'autre de la poulie. En variante l'accessoire à poulie pourra être une pompe à eau.

### Deuxième mode de réalisation

En variante l'extrémité libre 72 de l'entretoise 70 est en forme de rivet pour fixation par rivetage du support 122 d'au moins un galet tendeur. Cette solution est plus facile à réaliser lorsque, de manière précitée, le flasque avant est en matière plastique, les têtes des rivets se déforment à chaud pour réaliser le rivetage. Dans tous les cas le support 122 est localement troué pour passage des vis de fixation aux extrémités libres 72 des entretoises 70 ou pour passage des rivets des extrémités libres des entretoises 70 enracinées au flasque 8.

Les entretoises 70 et les creusures 71 sont avantageusement obtenues par moulage du flasque 8 en matière moulable.

### Autres formes de réalisations

En variante le fond 31 du flasque avant 8 est incliné. Dans ce cas le flasque comporte un nez pour le logement du roulement à billes de montage à rotation de l'arbre de rotor.
En variante, dans le cadre d'un alternateur, le support 122 ne porte qu'un galet tendeur avec intervention d'un ressort spirale ou d'un dispositif à pignon et crémaillère comme décrit dans le document EP0 459 894 précité.

L'organe porté par le support n'est pas forcément un galet.

En variante le flasque avant n'est pas ajouré, le carter de la machine comportant une chambre de refroidissement de la machine pour circulation d'un fluide caloporteur, tel que le liquide de refroidissement du moteur thermique d'un véhicule automobile.

### Applications

Dans ces figures 2 à 5 l'alterno-démarreur, outre sa fonction de démarreur et sa fonction de marche arrêt du moteur thermique du véhicule, pourra réaliser en fonction de sa puissance d'autres fonctions, notamment pour éviter que le moteur thermique cale. L'alterno-démarreur est en variante un alterno-démarreur à composants électroniques intégrés et à mezzanine comme décrit par exemple dans les documents WO 2006/129030 et WO 2004/040738.

En variante :
- la machine électrique tournante est un moteur électrique ;
- le moteur électrique entraîne au moins un autre accessoire ;
- la machine électrique tournante est un moteur électrique dépourvu de balais et piloté par un onduleur comme décrit par exemple dans le document EP 0831 580 ;
- la machine électrique est un démarreur à courroie.
- la machine électrique tournante est un alternateur à pont redresseur de courant alternatif à courant continu, par exemple du type de celui décrit dans le document WO 02/093717 précité.

## Revendications

1. Flasque avant (8) en matière moulable de machine électrique tournante (100) à poulie (1) de réception d'une courroie, **caractérisé en ce qu'**il comporte au moins deux entretoises (70) saillantes d'orientation axiale issues par moulage de sa périphérie externe et destinées à la fixation d'un support (122) d'au moins un organe, tel qu'un galet (21) tendeur de courroie, lesdites entretoises (70) comportant chacune latéralement au moins une creusure (71), notamment ménagée sur la paroi latérale externe de l'entretoise (70).

2. Flasque avant (8) selon la revendication 1, dans lequel les creusures (71) sont en forme de cavité s'étendant sur au moins 80% de la hauteur de l'entretoise, par exemple s'étendant sur toute la hauteur de l'entretoise.

3. Flasque avant (8) selon les revendications 1 ou 2, dans lequel les creusures (71) présentent un fond arrondi.

4. Flasque avant (8) selon l'une quelconque des revendications 1 à 3, dans lequel les entretoises (70) sont en forme de cheminée.

5. Flasque avant (8) selon l'une quelconque des revendications précédentes, dans lequel une extrémité libre (72) de chaque entretoise (70) comporte un trou, notamment taraudé, pour vissage du support (122).

6. Flasque avant (8) selon l'une quelconque des revendications précédentes, dans lequel l'une au moins des entretoises (70) comporte deux creusures (71).

7. Flasque avant (8) selon l'une quelconque des revendications précédentes, dans lequel il est prévu entre trois et quatre entretoises (70) équipées chacune d'au moins deux creusures (71).

8. Flasque avant (8) selon l'une quelconque des revendications précédentes, dans lequel les entretoises sont réparties circonférentiellement deux à deux selon un angle compris entre 30° et 100°, par exemple entre 45° et 90°.

9. Flasque avant (8) selon l'une quelconque des revendications précédentes, dans lequel l'une au moins des entretoises (70) comporte à sa périphérie externe une ouverture (132) implantée au voisinage de la zone d'enracinement (73) de l'entretoise (70) au corps du flasque avant.

10. Flasque avant (8) selon l'une quelconque des revendications précédentes comportant un fond (31) prolongé à sa périphérie externe par un rebord (30), dans lequel les creusures (71) s'étendent axialement de l'extrémité libre (72) des entretoises (70) à une zone d'enracinement (74) au fond (31) du flasque (8).

11. Machine électrique tournante (100), notamment pour véhicule automobile, comportant une poulie (1) de réception d'une courroie **caractérisée en ce qu'**elle comporte un flasque avant (8) selon l'une des revendications précédentes.
